# EUROPEAN PATENT SPECIFICATION

(11) **EP 3 651 538 B1**
(45) Date of publication and mention of the grant of the patent: **08.09.2021**
(21) Application number: 17921337.6
(22) Date of filing: 11.08.2017
(51) Int. Cl.: H04W 76/10, H04W 88/02, H04W 88/08, H04W 76/36

(54) **DATA TRANSMISSION METHOD, TRANSMITTING END DEVICE, AND RECEIVING END DEVICE**
DATENÜBERTRAGUNGSVERFAHREN, ÜBERTRAGUNGSSEITIGE VORRICHTUNG UND EMPFANGSSEITIGE VORRICHTUNG
PROCÉDÉ DE TRANSMISSION DE DONNÉES, DISPOSITIF D'EXTRÉMITÉ DE TRANSMISSION ET DISPOSITIF D'EXTRÉMITÉ DE RÉCEPTION

(43) Date of publication of application: 13.05.2020
(73) Proprietor: GUANGDONG OPPO MOBILE TELECOMMUNICATIONS CORP., LTD., Wusha, Chang'an Dongguan, Guangdong 523860 (CN)
(72) Inventor: TANG, Hai, Dongguan Guangdong 523860 (CN)
(74) Representative: Penza, Giancarlo
(86) International application number: PCT/CN2017/097243
(87) International publication number: WO 2019/028896

(56) References cited:
- CN-A- 103 945 461
- CN-A- 106 664 733
- US-B2- 9 655 165
- HUAWEI ET AL: "QoS Flow to DRB Re-Mapping", 3GPP DRAFT; R2-1706787 QOS FLOW TO DRB RE-MAPPING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Qingdao, China; 20170627 - 20170629 26 June 2017 (2017-06-26), XP051301286, Retrieved from the Internet: URL:http://www.3gpp.org/ftp/Meetings_3GPP_ SYNC/RAN2/Docs/ [retrieved on 2017-06-26]
- CMCC: "QoS flow to DRB remapping", 3GPP DRAFT; R2-1702919 DRB REMAPPING DRAFT 1.3 - REVISED XM, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Spokane, USA; 20170403 - 20170407 25 March 2017 (2017-03-25), XP051254325, Retrieved from the Internet: URL:http://www.3gpp.org/ftp/tsg_ran/WG2_RL 2/TSGR2_97bis/Docs/ [retrieved on 2017-03-25]
- CATT: "QoS re-mapping of QoS flow and DRB", 3GPP DRAFT; R2-1706382_QOS_REMAPPING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Qingdao, China; 20170627 - 20170629 17 June 2017 (2017-06-17), XP051306986, Retrieved from the Internet: URL:http://www.3gpp.org/ftp/tsg_ran/WG2_RL 2/TSGR2_AHs/2017_06_NR/Docs/ [retrieved on 2017-06-17]
- ZTE: "Discussion on QoS flow-DRB remapping", 3GPP DRAFT; R2-1706667 DISCUSSION ON QOS FLOW-DRB REMAPPING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Qingdao, China; 20170627 - 20170629 16 June 2017 (2017-06-16), XP051306559, Retrieved from the Internet: URL:http://www.3gpp.org/ftp/tsg_ran/WG2_RL 2/TSGR2_AHs/2017_06_NR/Docs/ [retrieved on 2017-06-16]
- CATT: "Consideration on inter-RAT handover in case of IWK", 3GPP TSG-RAN WG2 meeting #98, no. R2-1704217, 19 May 2017 (2017-05-19), XP051264305, Hangzhou, China

## Description

### Technical Field

The present application relates to the field of communication, and more particularly, to a data transmission method, a transmitting device, and a receiving device.

### Background

In a New Radio (NR) Access Technology system, a Service Data Adaptation Protocol (SDAP) layer is added to a radio access network to accomplish mapping of a Quality of Service (QoS) flow to a Data Radio Bearer (DRB). At present, the radio access network establishes a default DRB for different QoS flows. However, the default DRB cannot meet data transmission requirements of different QoS flows. Therefore, how to improve the data transmission of the QoS flow is an urgent problem to be solved.

Related technologies are known from HUAWEI ET AL. "Qos Flow to DRB Re-Mapping", 3GPP DRAFT, R2-1706787, Vol. RAN WG2 no. Qingdao, China.

### Summary

Embodiments of the present application provide a data transmission method, a transmitting device and a receiving device according to appended independent claims. In a transmission process of a Quality of Service flow, a data radio bearer corresponding to the Quality of Service (QoS) flow can be switched from a source data radio bearer to a target data radio bearer, and after the switching, data packets of the Quality of Service flow will not be out of order and the transmission will not be interrupted, and reliability of data transmission is ensured.

### Brief Description of Drawings

FIG. 1 is a wireless communication system to which an embodiment of the present application is applied.
FIG. 2 is a schematic diagram of mapping of QoS flows to DRBs according to an embodiment of the present application.
FIG. 3 is a schematic flow chart of a data transmission method according to an embodiment of the present application.
FIG. 4 is a schematic flow chart of another data transmission method according to an embodiment of the present application.
FIG. 5 is a schematic block diagram of a transmitting device according to an embodiment of the present application.
FIG. 6 is a schematic block diagram of a receiving device according to an embodiment of the present application.
FIG. 7 is a schematic block diagram of a data transmission device according to an embodiment of the present application.
FIG. 8 is a schematic diagram of structure of a system chip according to an embodiment of the present application.

### Detailed Description

Technical solutions in realisations of the present application will be clearly and completely described below with reference to the drawings in the realisations of the present application.

The technical solutions of the embodiments of the present application may be applied to various communication systems, such as a Global System of Mobile communication (GSM) system, a Code Division Multiple Access (CDMA) system, a Wideband Code Division Multiple Access (WCDMA) system, a General Packet wireless Service (GPRS) system, a Long Term Evolution (LTE) system, an LTE Frequency Division Duplex (FDD) system, an LTE Time Division Duplex (TDD) system, a Universal Mobile Telecommunication System (UMTS) system, a Worldwide Interoperability for Microwave Access (WiMAX) communication system, or a future 5G system.

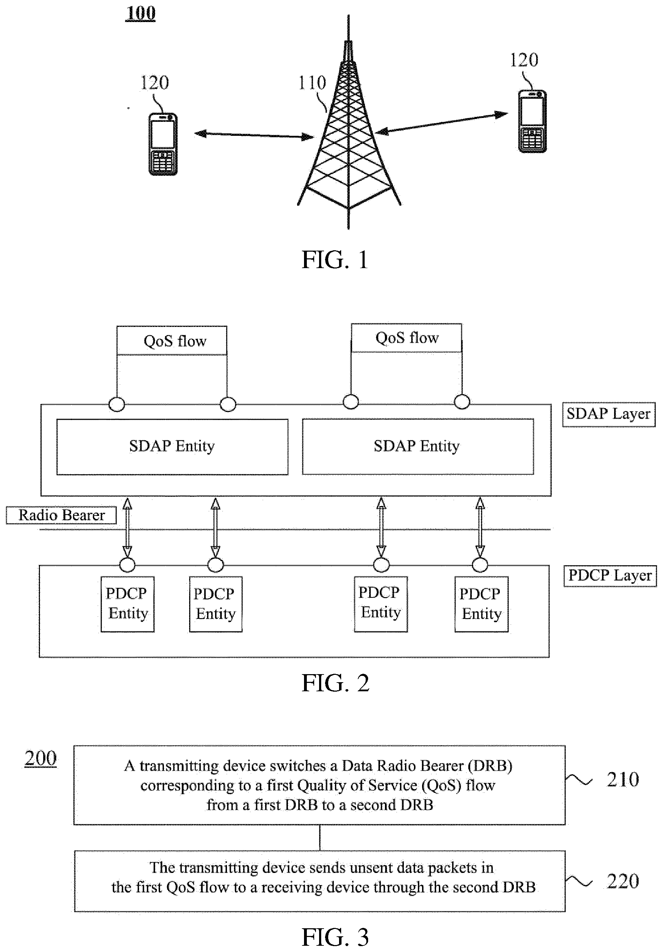

FIG. 1 shows a wireless communication system 100 to which an embodiment of the present application is applied. The wireless communication system 100 may include a network device 110. The network device 110 may be a device that communicates with a terminal device. The network device 110 may provide communication coverage for a specific geographical area, and may communicate with a terminal device (e.g., UE) in the coverage area. Optionally, the network device 110 may be a Base Transceiver Station (BTS) in a GSM system or CDMA system, a NodeB (NB) in a WCDMA system, an Evolutional Node B (eNB or eNodeB) in an LTE system, or a radio controller in a Cloud Radio Access Network (CRAN). Or the network device may be a relay station, an access point, a vehicle-mounted device, a wearable device, a network side device in a future 5G network, or a network device in a future evolved Public Land Mobile Network (PLMN), etc.

The wireless communication system 100 further includes at least one terminal device 120 in the coverage area of the network device 110. The terminal device 120 may be mobile or fixed. The terminal device 120 may be referred to as an access terminal, a User Equipment (UE), a subscriber unit, a subscriber station, a mobile station, a remote station, a remote terminal, a mobile device, a user terminal, a terminal, a wireless communication device, a user agent, or a user apparatus. The access terminal may be a cellular phone, a cordless phone, a Session Initiation Protocol (SIP) phone, a Wireless Local Loop (WLL) station, a Personal Digital Assistant (PDA), a handheld device with a wireless communication function, a computing device, or other processing device connected to a wireless modem, a vehicle-mounted device, a wearable device, a terminal device in a future 5G network, or a terminal device in a future evolved Public Land Mobile Network (PLMN), or the like.

Optionally, Device to Device (D2D) communication may be performed between the terminal devices 120.

Optionally, the 5G system or network may be referred to as a New Radio (NR) system or network.

FIG. 1 exemplifies one network device and two terminal devices. Optionally, the wireless communication system 100 may include multiple network devices, and another quantity of terminal devices may be included within the coverage area of each network device, which is not restricted in the present application.

Optionally, the wireless communication system 100 may further include other network entities such as a network controller, a mobile management entity, which is not restricted in the present application.

The process of mapping Quality of Service (QoS) flows to Data Radio Bearers (DRBs) in an embodiment not covered by the claimed invention will be briefly described below with reference to FIG. 2. In the 5G system, an SDAP layer is added to an upper layer of a Packet Data Convergence Protocol (PDCP) layer on a Radio Access Network (RAN) side for accomplishing mapping of a QoS flow to a DRB. Specifically, as shown in FIG. 2, an Internet Protocol (IP) layer maps a data packet from an IP flow to a QoS flow, then the SDAP maps the data packet from the QoS flow to a radio bearer which specifically is a DRB. Different QoS flows may be mapped to a same DRB, and the data packet is delivered to the PDCP layer through the mapped DRB for processing. For an uplink data packet, the mapping of the QoS flow to the DRB may be directly indicated to a terminal through Radio Resource Control (RRC), or may be obtained through reflective QoS mapping. Specifically, a network device may carry an Identity (ID) of the QoS flow in all downlink data packets belonging to the same QoS flow. After successfully obtaining each downlink data packet, the terminal device may record the mapping of the QoS flow to the DRB. When there is an uplink data packet which needs to be sent, the terminal device directly sends the uplink data packet according to the recorded mapping relationship. Since in the existing solution, all the downlink data packets belonging to the same QoS flow need to carry the Identity of the QoS flow, it results in that network overhead is relatively large.

It should be understood that the terms "system" and "network" are often used interchangeably in this document. The term "and/or" in this document is merely an association relationship describing associated objects, indicating that there may be three relationships, for example, A and/or B may indicate three cases: A alone, A and B, and B alone. In addition, the symbol "/" in this document generally indicates that objects before and after the symbol "/" have an "or" relationship.

FIG. 3 is a schematic flow chart of a data transmission method 200 according to an embodiment of the present application. As shown in FIG. 3, the method 200 may be performed by a transmitting device, which may be a network device as shown in FIG. 1 or a terminal device as shown in FIG. 1. A receiving device in the method 200 may be the network device as shown in FIG. 1 or the terminal device as shown in FIG. 1. The method 200 includes following contents.

In 210, a transmitting device switches a Data Radio Bearer (DRB) corresponding to a first Quality of Service (QoS) flow from a first DRB to a second DRB.

Optionally, an SDAP within the transmitting device may switch the Data Radio Bearer (DRB) corresponding to the first QoS flow from the first DRB to the second DRB.

Optionally, a QoS Class Identifier (QCI) of a data packet transmitted on the second DRB is superior to a QCI of a data packet transmitted on the first DRB.

It should be understood that the higher a QCI of a data packet is, the higher a transmission rate of the data packet is.

Optionally, the first DRB may be a default DRB established by the Radio Access Network side, and all different QoS flows will be mapped to the default DRB.

Optionally, the second DRB is more suitable for a transmission requirement of the first QoS flow.

Optionally, when the transmitting device is a network device, the network device may directly decide to switch the DRB corresponding to the first QoS flow from the first DRB to the second DRB.

When the transmitting device is a terminal device, the transmitting device receives indication information, wherein the indication information is used for indicating switching the DRB corresponding to the first QoS flow from the first DRB to the second DRB, so that the transmitting device can switch the DRB corresponding to the first QoS flow from the first DRB to the second DRB according to the indication information.

The indication information is a Radio Resource Control (RRC) signaling or Reflective QoS (RQoS), wherein the RQoS is determined according to an Identity (ID) of a data packet received on the second DRB.

Optionally, before the transmitting device switches the DRB corresponding to the first QoS flow from the first DRB to the second DRB, the method further includes: the transmitting device sends at least one data packet in the first QoS flow through the first DRB.

In 220, the transmitting device sends unsent data packets in the first QoS flow to the receiving device through the second DRB.

Optionally, the transmitting device may ensure that data packets of the first QoS flow transmitted through the first DRB and data packets of the first QoS flow transmitted through the second DRB are delivered in sequence (transmission reliability of the first QoS flow) by following modes.

In mode 1, before the transmitting device sends the at least one data packet in the first QoS flow through the first DRB, the transmitting device adds first identity information to a header of the last data packet in the at least one data packet, wherein the first identity information is used for indicating that the last data packet is the last data packet sent by the transmitting device through the first DRB.

Therefore, the receiving device can determine a sequence of the data packets in the first QoS flow according to the first identity information, and ensure transmission reliability of the first QoS flow.

Optionally, the first identity information may be an end marker.

For example, the first identity information is added to an SDAP header.

In mode 2, the transmitting device sends a first identity packet after sending the at least one data packet, wherein the first identity packet is used for indicating that a previous data packet of the first identity packet is the last data packet corresponding to the first DRB.

Therefore, the receiving device can determine a sequence of the data packets in the first QoS flow according to the first identity packet, and ensure transmission reliability of the first QoS flow.

The first identity packet is a new data packet generated by the transmitting device after sending the at least one data packet.

The first identity packet is an SDAP Protocol Data Unit (PDU) without payload or an SDAP control PDU.

In mode 3, before the transmitting device sends the unsent data packets to the receiving device through the second DRB, the transmitting device adds second identity information to a header of the first data packet in the unsent data packets, wherein the second identity information is used for indicating that the transmitting device sends a data packet in the first QoS flow through the first DRB before sending the first data packet.

Therefore, the receiving device can determine a sequence of the data packets in the first QoS flow according to the second identity information, and ensure transmission reliability of the first QoS flow.

Optionally, the second identity information may be a start marker.

For example, the second identity information is added to an SDAP header.

In mode 4, before the transmitting device sends the unsent data packets to the receiving device through the second DRB, the transmitting device sends a second identity packet to the receiving device through the second DRB, wherein the second identity packet is used for indicating that the transmitting device sends a data packet in the first QoS flow through the first DRB before sending the second identity packet.

Therefore, the receiving device can determine a sequence of the data packets in the first QoS flow according to the second identity packet, and ensure transmission reliability of the first QoS flow.

The second identity packet is a new data packet generated by the transmitting device before sending the unsent data packets.

The second identity packet is an SDAP PDU without payload or an SDAP control PDU.

Optionally, the transmitting device may ensure that the data packets of the first QoS flow transmitted through the first DRB and the data packets of the first QoS flow transmitted through the second DRB are delivered in sequence (transmission reliability of the first QoS flow) according to at least one of the above four modes.

Therefore, in the data transmission method of an embodiment of the present application, the transmitting device can indicate the last data packet sent through the first DRB through the first identity information after switching the DRB corresponding to the first QoS flow from the first DRB to the second DRB in the transmission process of the first QoS flow, thereby ensuring that the first QoS flow is not out of order in the transmission process, and ensuring reliability of data transmission.

Further, a QoS Class Identifier (QCI) of a data packet transmitted on the second DRB is superior to a QCI of a data packet transmitted on the first DRB, so that data transmission can be performed more efficiently after the DRB corresponding to the first QoS flow is switched from the first DRB to the second DRB.

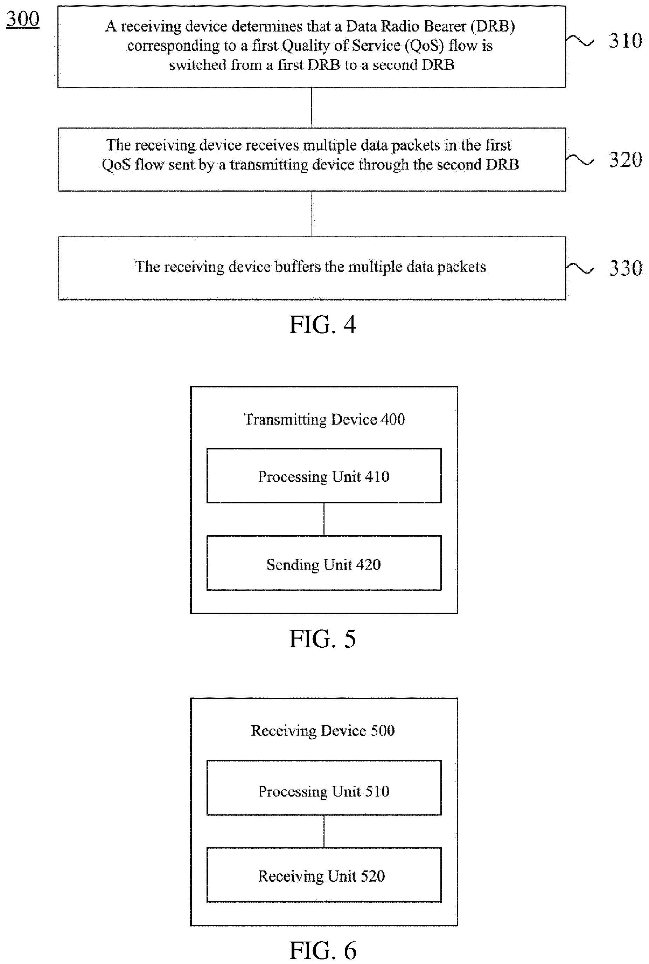

FIG. 4 is a schematic flow chart of a data transmission method 300 according to an embodiment of the present application. As shown in FIG. 4, the method 300 may be performed by a receiving device, which may be a network device as shown in FIG. 1 or a terminal device as shown in FIG. 1. A transmitting device in the method 300 may be a network device as shown in FIG. 1 or a terminal device as shown in FIG. 1. The method 300 includes following contents.

In 310, a receiving device determines that a Data Radio Bearer (DRB) corresponding to a first Quality of Service (QoS) flow is switched from a first DRB to a second DRB.

Optionally, a QoS Class Identifier (QCI) of a data packet transmitted on the second DRB is superior to a QCI of a data packet transmitted on the first DRB.

Optionally, when the receiving device is a network device, the receiving device may directly determine that the Data Radio Bearer (DRB) corresponding to the first QoS flow is switched from the first DRB to the second DRB.

When the receiving device is a terminal device, the receiving device receives indication information, wherein the indication information is used for indicating that the DRB corresponding to the first QoS flow is switched from the first DRB to the second DRB, and the receiving device may determine that the Data Radio Bearer (DRB) corresponding to the first QoS flow is switched from the first DRB to the second DRB according to the indication information.

The indication information is a Radio Resource Control (RRC) signaling or a reflective quality of service, wherein the reflective quality of service is determined according to an Identity (ID) of a data packet received on the second DRB.

In 320, the receiving device receives multiple data packets in the first QoS flow sent by the transmitting device through the second DRB.

In 330, the receiving device buffers the multiple data packets.

Optionally, if the receiving device first receives data packets sent by the transmitting device through the first DRB, the receiving device directly delivers this part of data packets.

Optionally, if the receiving device first receives multiple data packets sent by the transmitting device through the second DRB, the receiving device buffers the multiple data packets.

Specifically, whether to buffer the multiple data packets may be determined according to following two modes.

In mode 1, a packet header of the first data packet in the multiple data packets includes first identity information, wherein the first identity information is used for indicating that the transmitting device sends a data packet in the first QoS flow through the first DRB before sending the first data packet. At this case, the receiving device may determine that the multiple data packets need to be buffered according to the first identity information.

Optionally, the first identity information may be a start marker.

For example, the first identity information is added to an SDAP header.

In mode 2, before the receiving device receives the multiple data packets, the receiving device receives a first identity packet through the second DRB, wherein the first identity packet is used for indicating that the transmitting device sends a data packet in the first QoS flow through the first DRB before sending the first identity packet. At this case, the receiving device may determine that the multiple data packets need to be buffered according to the first identity packet.

The first identity packet is a new data packet generated by the transmitting device before sending the multiple data packets.

The first identity packet is an SDAP PDU without payload or an SDAP control PDU.

The method 300 further includes: the receiving device receives at least one data packet in the first QoS flow sent by the transmitting device through the first DRB, wherein a header of the last data packet in the at least one data packet includes second identity information for indicating that the last data packet is the last data packet sent by the transmitting device through the first DRB; the receiving device transmits the multiple data packets received through the second DRB and the at least one data packet received through the first DRB according to the second identity information.

Optionally, the second identity information may be an end marker.

For example, the second identity information is added to an SDAP header.

The method 300 further includes: the receiving device receives at least one data packet in the first QoS flow sent by the transmitting device through the first DRB; the receiving device receives a second identity packet sent by the transmitting device through the first DRB, wherein the second identity packet is used for indicating that a previous data packet of the second identity packet is the last data packet sent by the transmitting device through the first DRB; the receiving device transmits the multiple data packets received through the second DRB and the at least one data packet received through the first DRB according to the second identity packet.

The second identity packet is a new data packet generated by the transmitting device after sending the at least one data packet.

The second identity packet is an SDAP PDU without payload or an SDAP control PDU.

It should be understood that the acts in the data transmission method 300 may refer to the description of corresponding acts in the data transmission method 200, and will not be repeated here for the sake of brevity.

Therefore, in the data transmission method of an embodiment of the present application, the receiving device can determine that the DRB corresponding to the first QoS flow is switched from the first DRB to the second DRB in the transmission process of the first QoS flow, and after receiving the multiple data packets in the first QoS flow transmitted by the transmitting device through the second DRB, buffer these data packets, thereby ensuring that the first QoS flow is not out of order in the transmission process, and then ensuring reliability of the data transmission.

Further, after the receiving device determines that the DRB corresponding to the first QoS flow is switched from the first DRB to the second DRB, the last data packet sent through the first DRB is indicated through the second identity information, thereby ensuring that the first QoS flow is not out of order in the transmission process, and then ensuring reliability of the data transmission.

Further, a QoS Class Identifier (QCI) of a data packet transmitted on the second DRB is superior to a QCI of a data packet transmitted on the first DRB, so that data transmission can be performed more efficiently after the DRB corresponding to the first QoS flow is switched from the first DRB to the second DRB.

FIG. 5 is a schematic block diagram of a transmitting device 400 according to an embodiment of the present application. As shown in FIG. 5, the transmitting device 400 includes: a processing unit 410, used for switching a Data Radio Bearer (DRB) corresponding to a first Quality of Service (QoS) flow from a first DRB to a second DRB; a sending unit 420, used for sending unsent data packets in the first QoS flow to a receiving device through the second DRB.

Before the processing unit 410 switches the DRB corresponding to the first QoS flow from the first DRB to the second DRB, the transmitting device 400 further includes: a receiving unit 430, used for receiving indication information, the indication information is used for indicating switching the DRB corresponding to the first QoS flow from the first DRB to the second DRB.

The indication information is a Radio Resource Control (RRC) signaling or a Reflective Quality of Service (RQoS), wherein the RQoS is determined according to an Identity (ID) of a data packet received on the second DRB.

Optionally, before the processing unit 410 switches the DRB corresponding to the first QoS flow from the first DRB to the second DRB, the sending unit 420 is further used for sending at least one data packet in the first QoS flow through the first DRB.

Before the sending unit 420 sends the at least one data packet in the first QoS flow through the first DRB, the processing unit 410 is further used for adding first identity information to a header of the last data packet in the at least one data packet, wherein the first identity information is used for indicating that the last data packet is the last data packet sent by the transmitting device through the first DRB.

The sending unit 420 is further used for sending a first identity packet after sending the at least one data packet, wherein the first identity packet is used for indicating that a previous data packet of the first identity packet is the last data packet corresponding to the first DRB.

Before the sending unit 420 sends the unsent data packets to the receiving device through the second DRB, the processing unit 410 is further used for adding second identity information to a header of the first data packet in the unsent data packets, wherein the second identity information is used for indicating that the transmitting device sends a data packet in the first QoS flow through the first DRB before sending the first data packet.

Before the sending unit 420 sends the unsent data packets to the receiving device through the second DRB, the sending unit 420 is further used for sending a second identity packet to the receiving device through the second DRB, wherein the second identity packet is used for indicating that the transmitting device sends a data packet in the first QoS flow through the first DRB before sending the second identity packet.

Optionally, a QoS Class Identifier (QCI) of a data packet transmitted on the second DRB is superior to a QCI of a data packet transmitted on the first DRB.

It should be understood that the transmitting device 400 according to the embodiment of the present application may correspond to the transmitting device in the method embodiment of the present application, and the above and other operations and/or functions of various units in the transmitting device 400 are respectively for implementing the corresponding processes of the transmitting device in the method 200 shown in FIG. 3, and will not be repeated here for the sake of brevity.

FIG. 6 is a schematic block diagram of a receiving device 500 according to an embodiment of the present application. As shown in FIG. 6, the receiving device 500 includes: a processing unit 510, used for determining that a Data Radio Bearer (DRB) corresponding to a first Quality of Service (QoS) flow is switched from a first DRB to a second DRB; a receiving unit 520, used for receiving multiple data packets in the first QoS flow sent by a transmitting device through the second DRB; a processing unit 510, further used for buffering the multiple data packets.

Before the processing unit 510 determines that the DRB corresponding to the first QoS flow is switched from the first DRB to the second DRB, the receiving unit 520 is further used for receiving indication information, wherein the indication information is used for indicating that the DRB corresponding to the first QoS flow is switched from the first DRB to the second DRB.

The indication information is a Radio Resource Control (RRC) signaling or a reflective quality of service, which is determined according to an Identity (ID) of a data packet received on the second DRB.

Optionally, a header of the first data packet in the multiple data packets includes first identity information, wherein the first identity information is used for indicating that the transmitting device sends a data packet in the first QoS flow through the first DRB before sending the first data packet; the processing unit 510 is further used for determining that the multiple data packets need to be buffered according to the first identity information.

Optionally, before the receiving unit 520 receives the multiple data packets, the receiving unit 520 is further used for receiving a first identity packet through the second DRB, wherein the first identity packet is used for indicating that the transmitting device sends a data packet in the first QoS flow through the first DRB before sending the first identity packet; the processing unit 510 is further used for determining that the multiple data packets need to be buffered according to the first identity packet.

The receiving unit 520 is further used for receiving at least one data packet in the first QoS flow sent by the transmitting device through the first DRB, wherein a header of the last data packet in the at least one data packet includes second identity information, and the second identity information is used for indicating that the last data packet is the last data packet sent by the transmitting device through the first DRB; the receiving device 500 further includes: a sending unit 530, used for transmitting the multiple data packets received through the second DRB and the at least one data packet received through the first DRB according to the second identity information.

The receiving unit 520 is further used for receiving at least one data packet in the first QoS flow sent by the transmitting device through the first DRB; the receiving unit 520 is further used for receiving a second identity packet sent by the transmitting device through the first DRB, wherein the second identity packet is used for indicating that a previous data packet of the second identity packet is the last data packet sent by the transmitting device through the first DRB; the receiving device 500 further includes: a sending unit 530, used for transmitting the multiple data packets received through the second DRB and the at least one data packet received through the first DRB according to the second identity packet.

Optionally, a QoS Class Identifier (QCI) of a data packet transmitted on the second DRB is superior to a QCI of a data packet transmitted on the first DRB.

It should be understood that the receiving device 500 according to the embodiment of the present application may correspond to the terminal device in the method embodiment of the present application, and the above and other operations and/or functions of various units in the receiving device 500 are respectively for implementing the corresponding processes of the receiving device in the method 300 shown in FIG. 4, and will not be repeated here for the sake of brevity.

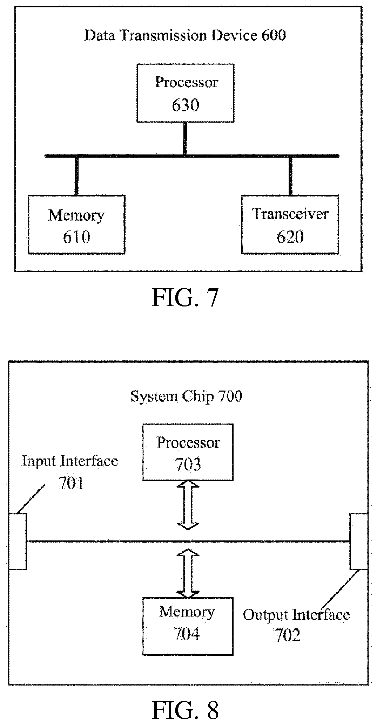

FIG. 7 shows a schematic block diagram of a data transmission device 600 according to an embodiment of the present application. The device 600 includes: a memory 610, used for storing a program, wherein the program includes codes; a transceiver 620, used for communicating with other devices; and a processor 630, used for executing the codes of the program in the memory 610.

Optionally, when the codes are executed, the processor 630 may implement various operations performed by the transmitting device in the method 200 in FIG. 3, which will not be repeated here for brevity. At this case, the device 600 may be a network device (e.g., an access network device or a core network device) or a terminal device (e.g., a cell phone). The transceiver 620 is used for performing specific transmitting and receiving of signals under the driving of the processor 630.

Optionally, when the codes are executed, the processor 630 may also implement various operations performed by the receiving device in the method 300 in FIG. 4, which will not be repeated here for brevity. At this case, the device 600 may be a terminal device (e.g., a cell phone) or a network device (e.g., an access network device or a core network device).

It should be understood that in the present application, the processor 630 may be a Central Processing Unit (CPU), or the processor 630 may be other general purpose processors, digital signal processors (DSP), application specific integrated circuits (ASIC), Field programmable gate arrays (FPGA) or other programmable logic devices, discrete gate or transistor logic devices, discrete hardware components, etc. The general purpose processor may be a microprocessor or the processor may be any conventional processor or the like.

The memory 610 may include a read-only memory and a random access memory, and provide instructions and data to the processor 630. A portion of the memory 610 may include a non-volatile random access memory. For example, the memory 610 may also store type information of a device.

The transceiver 620 may be used for implementing signal transmission and reception functions, such as frequency modulation and demodulation functions, or up-conversion and down-conversion functions.

In the implementation process, at least one act of the method may be accomplished by an integrated logic circuit of hardware in the processor 630, or the integrated logic circuit may accomplish the at least one act under the driving of instructions in a form of software. Therefore, the data transmission device 600 may be a chip or a chipset. The acts of the method disclosed in connection with the present application may be directly accomplished by an execution of a hardware processor or by a combination of hardware and software modules in a processor. The software modules may be located in a storage medium commonly used in the art, such as a random access memory, a flash memory, a read-only memory, a programmable read-only memory or an electrically erasable programmable memory, or a register. The storage medium is located in the memory, and the processor 630 reads the information in the memory and accomplishes the acts of the method with its hardware. In order to avoid repetition, it will not be described in detail here.

FIG. 8 is a schematic block diagram of a system chip 700 according to an embodiment of the present application. The system chip 700 of FIG. 8 includes an input interface 701, an output interface 702, a processor 703 and a memory 704, and the processor 703 and the memory 704 may be connected through internal communication connection lines, and the processor 1503 is used for executing codes in the memory 1504.

Optionally, when the codes are executed, the processor 703 implements the method performed by the transmitting device in the method embodiment. For sake of conciseness, the specific description will not be repeated here.

Optionally, when the codes are executed, the processor 703 implements the method performed by the receiving device in the method embodiment. For sake of conciseness, the specific description will not be repeated here.

Those of ordinary skill in the art will recognize that the exemplary units and algorithm acts described in connection with the embodiments disclosed herein may be implemented in electronic hardware, or a combination of computer software and electronic hardware. Whether these functions are implemented in hardware or software depends on a specific application and design constraint of the technical solution. Those skilled in the art may use different manners to implement the described functions for each particular application, but such implementation should not be considered to be beyond the scope of the present application.

Those skilled in the art may clearly understand that for convenience and conciseness of description, the specific working process of the system, device and unit described above may refer to the corresponding process in the embodiments of methods described above, and details are not described herein again.

In the present application, it should be understood that the disclosed system, device and method may be implemented in other ways. For example, the apparatuses described above are only illustrative, for another example, the division of the units is only a logical function division, and there may be other division manners in actual implementation. For still another example, multiple units or components may be combined or integrated into another system, or some features may be ignored or not executed. On the other hand, the mutual coupling or direct coupling or communication connection shown or discussed may be indirect coupling or communication connection through some interfaces, devices or units, and may be in electrical, mechanical or other forms.

The units described as separated components may or may not be physically separated, and the component shown as a unit may or may not be a physical unit, i.e., it may be located in one place or may be distributed over multiple network units. Some or all of the units may be selected according to practical needs to achieve a purpose of the solution of the application.

In addition, various functional units in various embodiments of the present application may be integrated in one processing unit, or various units may be physically present separately, or two or more units may be integrated in one unit.

The functions may be stored in a computer readable storage medium if implemented in a form of a software functional unit and sold or used as a separate product. Based on this understanding, the technical solution of the present application, in essence, or the part contributing to the existing art, or the part of the technical solution, may be realised in the form of a software product stored in a storage medium, including several instructions for causing a computer device (which may be a personal computer, a server, or a network device, etc.) to perform all or part of the acts of the methods described in the present application. The aforementioned storage media include a U disk, a mobile hard disk, read-only memory (ROM), a random access memory (RAM), a magnetic disk or an optical disk, and other media that is capable of storing program codes. The scope of protection of the present application is defined by the appended claims.

## Claims

1. A data transmission method, comprising the steps of:
receiving, by a transmitting device, indication information, wherein the indication information is used for indicating switching a Data Radio Bearer, DRB, corresponding to a first Quality of Service, QoS, flow from a first DRB to a second DRB; wherein the indication information is a Radio Resource Control, RRC, signaling or a Reflective Quality of Service, RQoS, wherein the RQoS is determined according to an Identity, ID, of a data packet received on the second DRB;
switching, by the transmitting device, the DRB corresponding to the first QoS flow from the first DRB to the second DRB (S210); and
sending, by the transmitting device, unsent data packets in the first QoS flow to a receiving device through the second DRB (S220); wherein before the transmitting device switches the DRB corresponding to the first QoS flow from the first DRB to the second DRB, the method further comprises:
sending, by the transmitting device, a first identity packet after sending at least one data packet in the first QoS flow through the first DRB, wherein the first identity packet is used for indicating that a previous data packet of the first identity packet is a last data packet corresponding to the first DRB; wherein, the first identity packet is a Service Data Adaptation Protocol, SDAP, Protocol Data Unit, PDU, without payload or an SDAP control PDU.

2. A data receiving method, comprising the steps of:
determining, by a receiving device, that a Data Radio Bearer, DRB, corresponding to a first Quality of Service, QoS, flow is switched from a first DRB to a second DRB (S310);
receiving, by the receiving device, indication information, wherein the indication information is used for indicating that the DRB corresponding to the first QoS flow is switched from the first DRB to the second DRB; wherein the indication information is a Radio Resource Control, RRC, signaling or a Reflective Quality of Service, RQoS, wherein the RQoS is determined according to an Identity, ID, of a data packet received on the second DRB; and
receiving, by the receiving device, a plurality of data packets in the first QoS flow sent by a transmitting device through the second DRB (S320); wherein the method further comprises:
receiving, by the receiving device, at least one data packet in the first QoS flow sent by the transmitting device through the first DRB;
receiving, by the receiving device, a second identity packet sent by that transmitting device through the first DRB, wherein the second identity packet is used for indicating that a previous data packet of the second identity packet is a last data packet sent by the transmitting device through the first DRB; and
transmitting, by the receiving device, the plurality of data packets received through the second DRB and the at least one data packet received through the first DRB according to the second identity packet; wherein, the second identity packet is a Service Data Adaptation Protocol, SDAP, Protocol Data Unit, PDU, without payload or an SDAP control PDU.

3. A transmitting device (400), comprising:
a receiving unit, configured for receiving indication information, wherein the indication information is used for indicating switching a Data Radio Bearer, DRB, corresponding to a a first Quality of Service, QoS, flow from a first DRB to the second DRB; wherein the indication information is a Radio Resource Control, RRC, signaling or a Reflective Quality of Service, RQoS, wherein the RQoS is determined according to an Identity, ID, of a data packet received on the second DRB;
a processing unit (410), configured for switching the DRB, corresponding to the firstQoS, flow from the first DRB to a second DRB; and
a sending unit (420), configured for sending unsent data packets in the first QoS flow to a receiving device through the second DRB; wherein the sending unit (420) is further configured for sending a first identity packet after sending at least one data packet through the first DRB before the processing unit (410) switches the DRB corresponding to the first QoS flow from the first DRB to the second DRB, wherein the first identity packet is used for indicating that a previous data packet of the first identity packet is a last data packet corresponding to the first DRB; wherein, the first identity packet is a Service Data Adaptation Protocol, SDAP, Protocol Data Unit, PDU, without payload or an SDAP control PDU.

4. A receiving device (500), comprising:
a processing unit (510), configured for determining that a Data Radio Bearer, DRB, corresponding to a first Quality of Service, QoS, flow is switched from a first DRB to a second DRB;
a receiving unit (520), configured for receiving indication information, wherein the indication information is used for indicating that the DRB corresponding to the first QoS flow is switched from the first DRB to the second DRB; wherein the indication information is a Radio Resource Control, RRC, signaling or a Reflective Quality of Service, RQoS, wherein the RQoS is determined according to an Identity, ID, of a data packet received on the second DRB; and
the receiving unit (520) is further configured for receiving a plurality of data packets in the first QoS flow sent by a transmitting device through the second DRB; wherein the receiving device further comprises:
the receiving unit is further used for receiving at least one data packet in the first QoS flow sent by the transmitting device through the first DRB;
the receiving unit is further used for receiving a second identity packet sent by the transmitting device through the first DRB, wherein the second identity packet is used for indicating that a previous data packet of the second identity packet is a last data packet sent by the transmitting device through the first DRB;
a sending unit, used for transmitting the plurality of data packets received through the second DRB and the at least one data packet received through the first DRB according to the second identity packet; wherein, the second identity packet is a Service Data Adaptation Protocol, SDAP, Protocol Data Unit, PDU, without payload or an SDAP control PDU.

## Patentansprüche

1. Datenübertragungsverfahren, das die folgenden Schritte umfasst:
Empfangen, in einer Sendevorrichtung, von Anzeigeinformationen, wobei die Anzeigeinformationen verwendet werden zum Anzeigen eines Umschaltens eines Datenfunkträgers (Data Radio Bearer, DRB), der einem ersten Dienstgütefluss (Quality of Service flow, QoS-Fluss) entspricht, von einem ersten DRB zu einem zweiten DRB, wobei die Anzeigeinformationen eine Funkressourcensteuerungssignalisierung (Radio Resource Control signaling, RRC-Signalisierung) oder eine reflektive Dienstgüte (Reflective Quality of Service, RQoS) sind, wobei die RQoS gemäß einer Kennung, ID, eines Datenpakets ermittelt wird, das auf dem zweiten DRB empfangen wird;
Umschalten, durch die Sendevorrichtung, des DRB, der dem ersten QoS-Fluss entspricht, von dem ersten DRB zu dem zweiten DRB (S210); und
Senden von in dem ersten QoS-Fluss nicht gesendeten Datenpaketen von der Sendevorrichtung durch den zweiten DRB zu einer Empfangsvorrichtung (S220);
wobei das Verfahren, bevor die Sendevorrichtung den DRB, der dem ersten QoS-Fluss entspricht, von dem ersten DRB zu dem zweiten DRB umschaltet, außerdem umfasst:
Senden, von der Sendevorrichtung, eines ersten Kennungspakets nach dem Senden des mindestens einen Datenpakets in dem ersten QoS-Fluss durch den ersten DRB, wobei das erste Kennungspaket verwendet wird, um anzuzeigen, das ein dem ersten Kennungspaket vorhergehendes Datenpaket ein letztes Datenpaket ist, das dem ersten DRB entspricht; wobei das erste Kennungspaket eine Protokolldateneinheit (Protocol Data Unit, PDU) mit einem Dienstdatenadaptationsprotokoll (Service Data Adaptation Protocol, SDAP) ohne Nutzdaten oder eine SDAP-Steuer-PDU ist.

2. Datenempfangsverfahren, das die folgenden Schritte umfasst:
Ermitteln, durch eine Empfangsvorrichtung, dass ein Datenfunkträger (Data Radio Bearer, DRB), der einem ersten Dienstgütefluss (Quality of Service flow, QoS-Fluss) entspricht, von einem ersten DRB zu einem zweiten DRB umgeschaltet wird (S310);
Empfangen von Anzeigeinformationen in der Empfangsvorrichtung, wobei die Anzeigeinformationen verwendet werden, um anzuzeigen, dass der DRB, der dem ersten QoS-Fluss entspricht, von dem ersten DRB zu dem zweiten DRB umgeschaltet wird, wobei die Anzeigeinformationen eine Funkressourcensteuerungssignalisierung (Radio Resource Control signaling, RRC-Signalisierung) oder eine reflektive Dienstgüte (Reflective Quality of Service, RQoS) sind, wobei die RQoS gemäß einer Kennung, ID, eines Datenpakets ermittelt wird, das auf dem zweiten DRB empfangen wird; und
Empfangen, in der Empfangsvorrichtung, einer Vielzahl von Datenpaketen in dem ersten QoS-Fluss, die von einer Sendevorrichtung durch den zweiten DRB gesendet werden (S320), wobei das Verfahren außerdem umfasst:
Empfangen, in der Empfangsvorrichtung, mindestens eines Datenpakets in dem ersten QoS-Fluss, das von der Sendevorrichtung durch den ersten DRB gesendet wird;
Empfangen, in der Empfangsvorrichtung, eines zweiten Kennungspakets, das von dieser Sendevorrichtung durch den ersten DRB gesendet wird, wobei das zweite Kennungspaket verwendet wird, um anzuzeigen, dass ein dem zweiten Kennungspakets vorhergehendes Datenpaket ein letztes Datenpaket ist, das von der Sendevorrichtung durch den ersten DRB gesendet wird; und
Senden, von der Empfangsvorrichtung, der Vielzahl von Datenpaketen, die durch den zweiten DRB empfangen wurden, und des mindestens einen Datenpakets, das durch den ersten DRB gesendet wurde, gemäß dem zweiten Kennungspaket, wobei das zweite Kennungspaket eine Protokolldateneinheit (Protocol Data Unit, PDU) mit einem Dienstdatenadaptationsprotokoll (Service Data Adaptation Protocol, SDAP) ohne Nutzdaten oder eine SDAP-Steuer-PDU ist.

3. Sendevorrichtung (400), umfassend:
eine Empfangseinheit, die konfiguriert ist zum Empfangen von Anzeigeinformationen, wobei die Anzeigeinformationen verwendet werden zum Anzeigen eines Umschaltens eines Datenfunkträgers (Data Radio Bearer, DRB), der einem ersten Dienstgütefluss (Quality of Service flow, QoS-Fluss) entspricht, von einem ersten DRB zu einem zweiten DRB, wobei die Anzeigeinformationen eine Funkressourcensteuerungssignalisierung (Radio Resource Control signaling, RRC-Signalisierung) oder eine reflektive Dienstgüte (Reflective Quality of Service, RQoS) sind, wobei die RQoS gemäß einer Kennung, ID, eines Datenpakets ermittelt wird, das auf dem zweiten DRB empfangen wird;
eine Verarbeitungseinheit (410), die konfiguriert ist zum Umschalten des DRB, der dem ersten QoS-Fluss entspricht, von dem ersten DRB zudem zweiten DRB; und
eine Sendeeinheit (420), die konfiguriert ist zum Senden von in dem ersten QoS-Fluss nicht gesendeten Datenpaketen durch den zweiten DRB zu einer Empfangsvorrichtung, wobei die Sendeeinheit (420) außerdem konfiguriert ist zum Senden eines ersten Kennungspakets nach dem Senden des mindestens einen Datenpakets durch den ersten DRB, bevor die Verarbeitungseinheit (410) den DRB, der dem ersten QoS-Fluss entspricht, von dem ersten DRB zu dem zweiten DRB umschaltet, wobei das erste Kennungspaket verwendet wird zum Anzeigen, dass ein dem ersten Kennungspaket vorhergehendes Datenpaket ein letztes Datenpaket ist, das dem ersten DRB entspricht, wobei das erste Kennungspaket eine Protokolldateneinheit (Protocol Data Unit, PDU) mit einem Dienstdatenadaptationsprotokoll (Service Data Adaptation Protocol, SDAP) ohne Nutzdaten oder eine SDAP-Steuer-PDU ist.

4. Empfangsvorrichtung (500), umfassend:
eine Verarbeitungseinheit (510), die konfiguriert ist zum Ermitteln, dass ein Datenfunkträger (Data Radio Bearer, DRB), der einem ersten Dienstgütefluss (Quality of Service flow, QoS-Fluss) entspricht, von einem ersten DRB zu einem zweiten DRB umgeschaltet wird;
eine Empfangseinheit (520), die konfiguriert ist zum Empfangen von Anzeigeinformationen, wobei die Anzeigeinformationen verwendet werden zum Anzeigen, dass der DRB, der dem ersten QoS-Fluss entspricht, von dem ersten DRB zu dem zweiten DRB umgeschaltet wird, wobei die Anzeigeinformationen eine Funkressourcensteuerungssignalisierung (Radio Resource Control signaling, RRC-Signalisierung) oder eine reflektive Dienstgüte (Reflective Quality of Service, RQoS) sind, wobei die RQoS gemäß einer Kennung, ID, eines Datenpakets ermittelt wird, das auf dem zweiten DRB empfangen wird; und
wobei die Empfangseinheit (520) außerdem konfiguriert ist zum Empfangen einer Vielzahl von Datenpaketen in dem ersten QoS-Fluss, die von einer Sendevorrichtung durch den zweiten DRB gesendet werden, wobei die Empfangsvorrichtung außerdem umfasst:
dass die Empfangseinheit außerdem verwendet wird zum Empfangen mindestens eines Datenpakets in dem ersten QoS-Fluss, das von der Sendevorrichtung durch den ersten DRB gesendet wird;
dass die Empfangseinheit außerdem verwendet wird zum Empfangen eines zweiten Kennungspakets, das von der Sendevorrichtung durch den ersten DRB gesendet wird, wobei das zweite Kennungspaket verwendet wird zum Anzeigen, dass ein dem zweiten Kennungspaket vorhergehendes Datenpaket ein letztes Datenpaket ist, das von der Sendevorrichtung durch den ersten DRB gesendet wird;
eine Sendeeinheit, die verwendet wird zum Senden der Vielzahl von Datenpaketen, die durch den zweiten DRB empfangen wurden, und des mindestens einen Datenpakets, das durch den ersten DRB gesendet wurde, gemäß dem zweiten Kennungspaket, wobei das zweite Kennungspaket eine Protokolldateneinheit (Protocol Data Unit, PDU) mit einem Dienstdatenadaptationsprotokoll (Service Data Adaptation Protocol, SDAP) ohne Nutzdaten oder eine SDAP-Steuer-PDU ist.

## Revendications

1. Procédé de transmission de données, comprenant les étapes suivantes :
recevoir, par un dispositif de transmission, des informations d'indication, les informations d'indication étant utilisées pour indiquer une commutation d'un porteur radio de données, DRB, correspondant à un premier flux de qualité de service, QoS, depuis un premier DRB vers un deuxième DRB ; les informations d'indication étant une signalisation de contrôle de ressources radio, RRC, ou une qualité de service réflexive, RQoS, le RQoS étant déterminé selon une identité, ID, d'un paquet de données reçu sur le deuxième DRB ;
commuter, par le dispositif de transmission, le DRB correspondant au premier flux QoS depuis le premier DRB vers le deuxième DRB (S210) ; et
envoyer, par le dispositif de transmission, les paquets de données non envoyés dans le premier flux QoS à un dispositif de réception par l'intermédiaire du deuxième DRB (S220) ; avant que le dispositif de transmission ne commute le DRB correspondant au premier flux QoS depuis le premier DRB vers le deuxième DRB, le procédé comprenant en outre :
envoyer, par le dispositif de transmission, un premier paquet d'identité après avoir envoyé au moins un paquet de données dans le premier flux QoS par l'intermédiaire du premier DRB, le premier paquet d'identité étant utilisé pour indiquer qu'un paquet de données précédent du premier paquet d'identité est un dernier paquet de données correspondant au premier DRB ; le premier paquet d'identité étant une unité de données de protocole, PDU, du protocole d'adaptation de données de service, SDAP, sans charge utile ou un PDU de contrôle SDAP.

2. Procédé de réception de données, comprenant les étapes suivantes :
déterminer, par un dispositif de réception, qu'un porteur radio de données, DRB, correspondant à un premier flux de qualité de service, QoS, est commuté depuis un premier DRB vers un deuxième DRB (S310) ;
recevoir, par le dispositif de réception, des informations d'indication, les informations d'indication étant utilisées pour indiquer que le DRB correspondant au premier flux QoS est commuté depuis le premier DRB vers le deuxième DRB ; les informations d'indication étant une signalisation de contrôle de ressources radio, RRC, ou une qualité de service réflexive, RQoS, le RQoS étant déterminé selon une identité, ID, d'un paquet de données reçu sur le deuxième DRB ; et
recevoir, par le dispositif de réception, une pluralité de paquets de données dans le premier flux QoS envoyé par un dispositif de transmission par l'intermédiaire du deuxième DRB (S320) ; le procédé comprenant en outre :
recevoir, par le dispositif de réception, au moins un paquet de données dans le premier flux QoS envoyé par le dispositif de transmission par l'intermédiaire du premier DRB ;
recevoir, par le dispositif de réception, un deuxième paquet d'identité envoyé par ce dispositif de transmission par l'intermédiaire du premier DRB, le deuxième paquet d'identité étant utilisé pour indiquer qu'un paquet de données précédent du deuxième paquet d'identité est un dernier paquet de données envoyé par le dispositif de transmission par l'intermédiaire du premier DRB ; et
transmettre, par le dispositif de réception, la pluralité de paquets de données reçus par l'intermédiaire du deuxième DRB et ledit paquet de données reçu par l'intermédiaire du premier DRB selon le deuxième paquet d'identité ; le deuxième paquet d'identité étant une unité de données de protocole, PDU, du protocole d'adaptation de données de service, SDAP, sans charge utile ou un PDU de contrôle SDAP.

3. Dispositif de transmission (400), comprenant :
une unité de réception, configurée pour recevoir des informations d'indication, les informations d'indication étant utilisées pour indiquer une commutation d'un porteur radio de données, DRB, correspondant à un premier flux de qualité de service, QoS, depuis un premier DRB vers le deuxième DRB ; les informations d'indication étant une signalisation de contrôle de ressources radio, RRC, ou une qualité de service réflexive, RQoS, le RQoS étant déterminé selon une identité, ID, d'un paquet de données reçu sur le deuxième DRB ;
une unité de traitement (410), configurée pour commuter le DRB correspondant au premier flux QoS depuis le premier DRB vers un deuxième DRB ; et
une unité d'envoi (420), configurée pour envoyer les paquets de données non envoyés dans le premier flux QoS à un dispositif de réception par l'intermédiaire du deuxième DRB ; l'unité d'envoi (420) étant en outre configurée pour envoyer un premier paquet d'identité après avoir envoyé au moins un paquet de données par l'intermédiaire du premier DRB avant que l'unité de traitement (410) ne commute le DRB correspondant au premier flux QoS depuis le premier DRB vers le deuxième DRB, le premier paquet d'identité étant utilisé pour indiquer qu'un paquet de données précédent du premier paquet d'identité est un dernier paquet de données correspondant au premier DRB ; le premier paquet d'identité étant une unité de données de protocole, PDU, du protocole d'adaptation de données de service, SDAP, sans charge utile ou un PDU de contrôle SDAP.

4. Dispositif de réception (500), comprenant :
une unité de traitement (510), configurée pour déterminer qu'un porteur radio de données, DRB, correspondant à un premier flux de qualité de service, QoS, est commuté depuis un premier DRB vers un deuxième DRB ;
une unité de réception (520), configurée pour recevoir des informations d'indication, les informations d'indication étant utilisées pour indiquer que le DRB correspondant au premier flux QoS est commuté depuis le premier DRB vers le deuxième DRB ; les informations d'indication étant une signalisation de contrôle de ressources radio, RRC, ou une qualité de service réflexive, RQoS, le RQoS étant déterminé selon une identité, ID, d'un paquet de données reçu sur le deuxième DRB ; et
l'unité de réception (520) est en outre configurée pour recevoir une pluralité de paquets de données dans le premier flux QoS envoyé par un dispositif de transmission par l'intermédiaire du deuxième DRB ; le dispositif de réception comprenant en outre :
l'unité de réception est en outre utilisée pour recevoir au moins un paquet de données dans le premier flux QoS envoyé par le dispositif de transmission par l'intermédiaire du premier DRB ;
l'unité de réception est en outre utilisée pour recevoir un deuxième paquet d'identité envoyé par le dispositif de transmission par l'intermédiaire du premier DRB, le deuxième paquet d'identité étant utilisé pour indiquer qu'un paquet de données précédent du deuxième paquet d'identité est un dernier paquet de données envoyé par le dispositif de transmission par l'intermédiaire du premier DRB ;
une unité d'envoi, utilisée pour transmettre la pluralité de paquets de données reçus par l'intermédiaire du deuxième DRB et ledit paquet de données reçu par l'intermédiaire du premier DRB selon le deuxième paquet d'identité ; le deuxième paquet d'identité étant une unité de données de protocole, PDU, du protocole d'adaptation de données de service, SDAP, sans charge utile ou un PDU de contrôle SDAP.
